# EUROPEAN PATENT APPLICATION

(11) **EP 0 895 241 A2**
(43) Date of publication of application: **03.02.1999**
(21) Application number: 98306053.4
(22) Date of filing: 29.07.1998
(51) Int. Cl.: G11B 23/03

(54) **Disc cartridge**

(30) Priority: 29.07.1997 JP 216978/97
(71) Applicant: TDK Corporation, Chuo-ku, Tokyo (JP)
(72) Inventor: Ikebe, Masaru, Saku-shi, Nagano (JP); Okamura, Masatoshi, Saku-shi, Nagano (JP)
(74) Representative: Luckhurst, Anthony Henry William

(57) **Abstract**

A disc cartridge is disclosed which is capable of ensuring positive movement of a shutter (5) on a casing (1,2). The shutter is reduced in size but provided with increased dimensional accuracy. Making the shutter of synthetic resin also reduces the cost and enhances operability of the shutter. Shutter sliding regions (14) are each provided thereon with a shutter guide mounting section (13) for mounting a respective one of shutter guides (3) thereon. The shutter guide mounting section (13) is formed so as to have a surface level defined between a surface of the shutter sliding region (14) and an outer surface of a casing (1,2). The shutter guide mounting section (13) is disposed at a position adjacent to a corresponding one of distal ends (5₁) of a shutter (5) and provided with at least one positioning recess (15). The shutter guides (3) are each provided with at least one positioning projection (31) which is engagedly fitted in the positioning recess (15) of the shutter guide mounting section (13) and are fixed to the shutter guide mounting sections (13) by fusion, respectively.

## Description

### BACKGROUND OF THE INVENTION

This invention relates to a disc cartridge, and more particularly to a disc cartridge which has a recordable and reproducible disc-like medium such as an optical disc, a magneto-optical disc or the like rotatably received in a casing and includes a shutter arranged so as to selectively close openings of the casing which permit a recording/reproducing device to be accessible to the disc-like medium.

In general, a disc-like medium acting as an information medium such as, for example, a magnetic disc, an optical disc, a magneto-optical disc or the like is used as a disc cartridge such as a 3.5-inch magneto-optical disc cartridge or the like, which includes a casing constituted of an upper casing member and a lower casing member in which the disc-like medium is received. The disc cartridge also includes a shutter for selectively closing openings of the casing such as a head insertion hole, a drive shaft insertion hole and the like. The shutter incorporated in the conventional disc cartridge is typically formed of a metal material to have a substantially U-shape and formed into a relatively increased length, so that shutter guides are arranged on the casing so as to guide opposite distal ends of the shutter, as disclosed in Japanese Utility Model Publication No. 55722/1995.

In such a disc cartridge, when the shutter is made of metal, the distal ends of the shutter may be formed by bending. Thus, the shutter guides may each be so formed that a distal end thereof into which the distal end of the shutter is inserted is reduced in thickness and a mounting portion thereof is increased in thickness. However, when it is required to provide a connection plate of the shutter with a projection or recess it is substantially impossible to make the shutter of metal. Thus, in this instance, it is required that the shutter be made of a plastic material. Nevertheless, when the shutter guide is required to be provided with a recess, it is difficult to form the shutter in correspondence to the shutter guide of such a complicated shape and provide satisfactory coupling between the shutter guide and the shutter. This results in durability of the shutter being deteriorated and leads to a failure in automatic and labor-saving assembling of the disc cartridge.

### SUMMARY OF THE INVENTION

The present invention has been made in view of the foregoing disadvantages of the prior art.

Accordingly, it is an object of the present invention to provide a disc cartridge which is capable of ensuring positive sliding or movement of a shutter.

It is another object of the present invention to provide a disc cartridge which is capable of permitting a shutter to be provided at a low cost.

It is a further object of the present invention to provide a disc cartridge which is capable of ensuring satisfactory operability of a shutter.

It is still another object of the present invention to provide a disc cartridge which is capable of facilitating mounting of a shutter on a casing.

In accordance with the present invention, a disc cartridge is provided. The disc cartridge includes a casing and a disc-like medium rotatably received in the casing. The casing is formed with openings through which at least a part of the disc-like medium extending in a radial direction thereof is outwardly exposed and permit a recording/reproducing head and a drive shaft to be inserted thereinto. Also, the casing is formed on an outer surface thereof with shutter sliding regions in a manner to be recessed from the outer surface. The disc cartridge also includes a shutter slidably mounted on the shutter sliding regions of the casing so as to selectively close the openings of the casing and shutter guides arranged on the outer surface of the casing. The shutter sliding regions are each provided thereon with a shutter guide mounting section for mounting a corresponding one of the shutter guides thereon. The shutter guide mounting section is formed so as to have a surface level defined between a surface of the shutter sliding region and the outer surface of the casing. The shutter guide mounting section is disposed at a position adjacent to a corresponding one of distal ends of the shutter when the shutter is fitted on the casing. The shutter guide mounting section is provided with at least one positioning recess. The shutter guides are provided with at least one positioning projection which is engagedly fitted in the positioning recess of the shutter guide mounting section. The shutter guides are fixed to the shutter guide mounting sections by fusion welding, respectively.

In a preferred embodiment of the present invention, the shutter is made of synthetic resin and formed so that distal ends thereof arranged inside the respective shutter guides each have a thickness smaller than that of a portion thereof covering the openings of the casing.

In a preferred embodiment of the present invention, the shutter sliding regions are each so formed that a portion thereof positionally corresponding to a respective one of the distal ends of the shutter is depressed from the remaining part of the sliding region.

In a preferred embodiment of the present invention, a plurality of such positioning recesses are formed in the shutter guide mounting section in a manner to be spaced from each other in a direction of movement or sliding of the shutter. The positioning recesses are each formed to have a depth smaller than a thickness of the casing so as not to penetrate the casing.

In a preferred embodiment of the present invention, the shutter guides are each made of synthetic resin and the positioning projection is formed with a submarine gate for molding of the shutter guide.

In a preferred embodiment of the present invention, the shutter guides are each so formed that a portion thereof positionally corresponding to the shutter guide mounting section has a thickness larger than that of a distal end thereof.

### BRIEF DESCRIPTION OF THE DRAWINGS

These and other objects and many of the attendant advantages of the present invention will be readily appreciated as the same becomes better understood by reference to the following detailed description when considered in connection with the accompanying drawings; wherein:
Fig. 1 is an exploded perspective view showing an embodiment of a disc cartridge according to the present invention;
Fig. 2A is a fragmentary vertical sectional view showing mounting of a shutter guide on a casing in the disc cartridge of Fig. 1;
Fig. 2B is a fragmentary vertical sectional view showing fitting of a shutter on the casing in the disc cartridge of Fig. 1;
Figs. 3A, 3B and 3C are a plan view, a front elevation view and a side elevation view showing the shutter guide, respectively;
Fig. 4A is a fragmentary vertical sectional view showing mounting of a shutter guide on a casing in another embodiment of a disc cartridge according to the present invention; and
Fig. 4B is a fragmentary vertical sectional view showing fitting of a shutter on the casing in the disc cartridge of Fig. 4A.

### DETAILED DESCRIPTION OF THE PREFERRED EMBODIMENTS

Now, a disc cartridge according to the present invention will be described hereinafter with reference to the accompanying drawings.

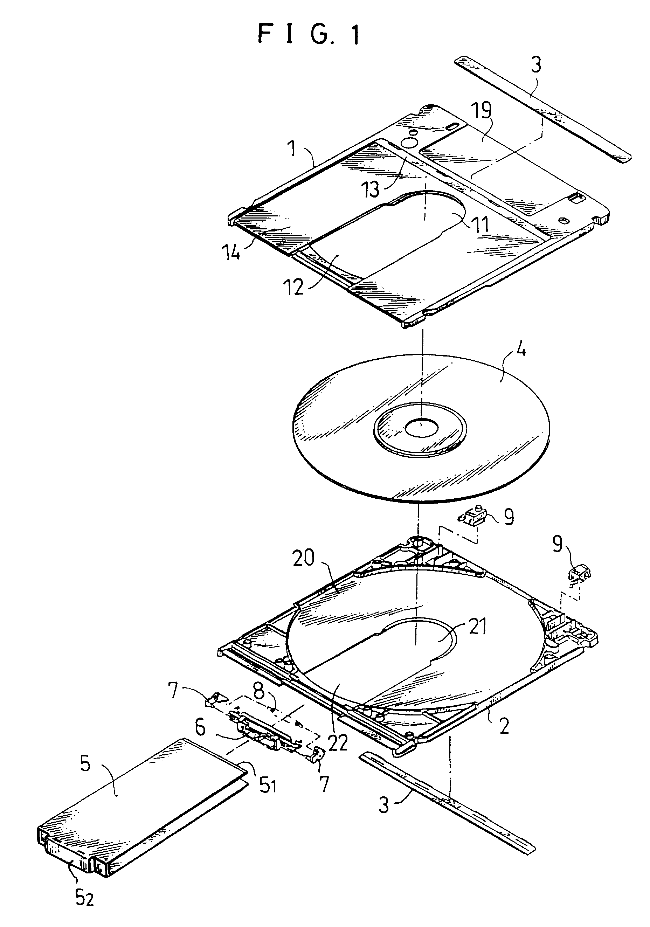

Referring first to Figs. 1 to 3C, an embodiment of a disc cartridge according to the present invention is illustrated. A disc cartridge includes a casing constituted of an upper casing member 1 and a lower casing member 2, as well as a double-sided recordable/reproducible disc-like medium 4 rotatably received in the casing. The casing is formed with openings such as drive shaft insertion holes 11 and 21, head insertion holes 12 and 22, and the like through which at least a part of the disc-like medium 4 extending in a radial direction thereof is outwardly exposed and which permit a drive shaft, a recording/reproducing head and the like of a recording and reproducing apparatus to be inserted thereinto. The disc cartridge also includes a shutter 5 slidably mounted or fitted on the casing so as to selectively close or open the openings of the casing. For this purpose, the casing is formed on an outer surface thereof and more specifically upper and lower outer surfaces thereof with shutter sliding regions 14 in a manner to be recessed from the outer surface. The shutter sliding regions or recesses 14 are each provided thereon with a shutter guide mounting section 13 which has a surface level defined between a surface of the shutter sliding region 14 and the outer surface of the casing. The shutter guide mounting sections 13 are each adapted to be mounted thereon with a shutter guide 3. Also, the shutter guide mounting sections 13 are disposed at positions adjacent to respective distal ends 5₁ of the shutter 5 when the shutter 5 is fitted on the casing. The shutter guide mounting section 13 is provided with at least one positioning recess 15. In the illustrated embodiment, a plurality of such positioning recesses 15 are arranged in a manner to be spaced from each other in a direction of movement or sliding of the shutter 5 and correspondingly the shutter guide 3 is provided with a plurality of positioning projections 31 which are engagedly fitted in the positioning recesses 15 of the shutter guide mounting section 13, respectively. The shutter guides 3 are each fixed to the shutter guide mounting section 13 by fusion welding as described below.

The shutter 5 is constituted of an upper plate, a lower plate, and a connection plate for connecting the upper and lower plate to each other therethrough, resulting in being formed to have a substantially U-shape in section. In the illustrated embodiment, the shutter 5 is made of a synthetic resin material. The shutter 5 is provided thereon with a first slider 6, a pair of second sliders 7 and an elastic member or spring 8 for constantly forcing the shutter 5 in a direction in which the shutter 5 is closed. The spring 8 may be in the form of a coiled spring. The first slider 6 is engaged with first guide grooves (not shown) formed in the upper and lower casing members 1 and 2 of the casing, resulting in being slid while being guided by the first guide grooves of the casing. The second sliders 7 are each engaged with second guide grooves (not shown) formed in the upper and lower casing members 1 and 2 of the casing, resulting in being slid while being guided by the second guide grooves. The second sliders 7 are arranged on both ends of the first slider 6 while elastically interposedly holding the first slider 6 therebetween by means of an elastic force of the spring 8. The connection plate of the shutter 5 is provided on an intermediate portion thereof with a projection 5₂, which is formed on at least one of upper and lower surfaces thereof with engagement holes. Correspondingly, the first slider 6 is provided thereon with elastically deformable projections, which are engagedly fitted in the engagement holes of the projection 5₂ of the connection plate of the shutter 5, so that the shutter 5 may be movable in both directions with movement of the slider 6 in both directions.

In assembling of the disc cartridge of the illustrated embodiment thus constructed, the disc-like medium 4, an miserasure preventing member or plug 9, the first slider 6, the second sliders 7 and the spring 8 are incorporated in one of the upper and lower casing members 1 and 2. Then, the upper and lower casing members 1 and 2 are fixedly joined to each other, followed by fitting of the shutter 5 on the first slider 6. Thus, the illustrated embodiment facilitates incorporation of the spring 8 for restoring the shutter 5 to a closed position and the sliders 6 and 7 for guiding of the shutter 5 in the casing because it is merely required to pressedly fit the shutter 5 onto the first slider 6 without any screw for fixing the shutter 5.

The shutter 5 is formed of a synthetic resin material as described above and has both distal ends 5₁ inserted or arranged inside the shutter guides 3 when it is mounted or fitted on the casing. The distal ends 5₁ of the shutter 5 are each formed to have a thickness smaller than that of portions of the shutter 5 which cover the openings of the casing. The positioning recesses 15 are located in the shutter guide mounting sections 13 formed to have a thickness larger than that of the shutter sliding regions 14 of the upper and lower casing members 1 and 2 of the casing so as not to penetrate the casing member. The positioning recesses 15 are arranged in a manner to be spaced from each other at predetermined intervals in a direction of movement or sliding of the shutter 5.

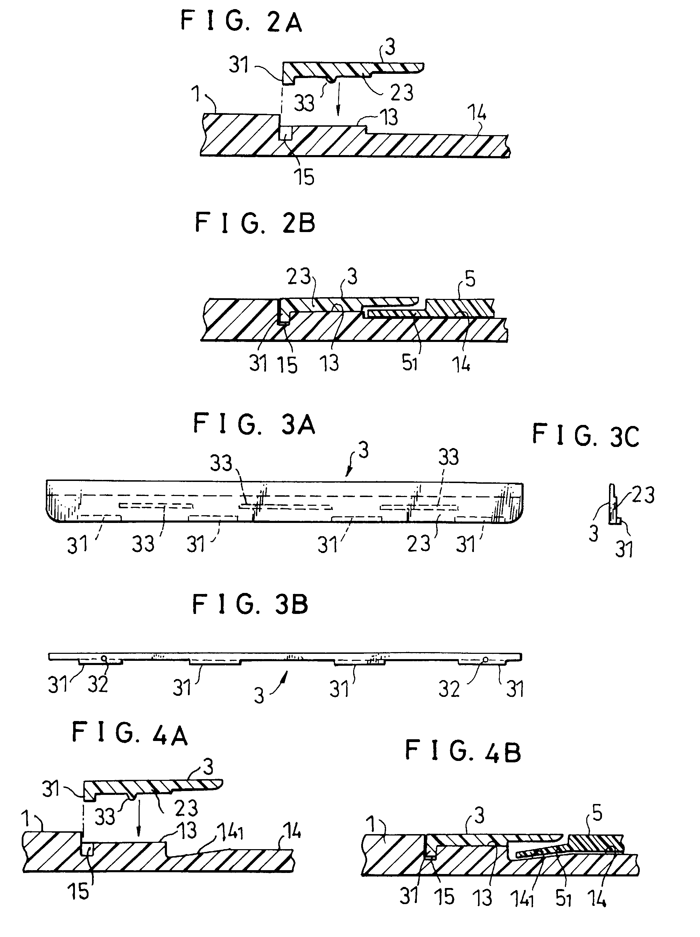

When each of the distal ends 5₁ of the shutter 5 is formed to have a reduced thickness, such a configuration of the distal end 5₁ possibly causes the distal end 5₁ to be inwardly curved or deflected. In order to conform with such deflection of the distal end 5₁, each of the shutter sliding regions or recesses 14 is preferably formed so that a portion thereof corresponding to the distal end 5₁ of the shutter 5 is depressed from the remaining part of the shutter sliding region 14. Such depression may be formed by downwardly slanting the portion of the shutter sliding region 14 as indicated at reference numeral 14₁ in Figs. 4A and 4B or forming the portion with a recessed step. Such construction of the shutter sliding region 14 ensures smooth movement or sliding of the shutter 5 while keeping the shutter 5 from being abutted against the casing. More particularly, it facilitates insertion of the distal end 5₁ of the shutter 5 between the outer surface of the casing and an inner surface of the shutter guide 3 to ensure smooth sliding of the shutter 5.

The shutter guides 3 likewise may be made of synthetic resin. The shutter guides 3 are each formed at a portion thereof positionally corresponding to the shutter guide mounting section 13 to have an increased thickness as compared with a distal end thereof, as indicated by reference numeral 23 in Figs. 4A and 4B. Some of the positioning projections 31 of each of the shutter guides 3 are preferably formed with submarine gates 32 for molding of the shutter guide 3. Also, the shutter guides 3 are each preferably provided on a surface thereof opposite to the shutter guide mounting section 13 with ribs 33 for fusion welding in a manner to be spaced from each other at predetermined intervals. This permits the shutter guide 3 to be fixed to the shutter guide mounting section 13 of the casing by fusion welding.

The shutter 5, as shown in Fig. 1, is formed to have a substantially U-shape in section so as to be slid on the casing while straddling the upper and lower casing members 1 and 2 of the casing at front ends thereof. The shutter 5 is arranged so as to be slid together with the first slider 6. The first slider 6 is formed with L-shaped projections and correspondingly the casing is formed on an inner surface thereof with grooves. The L-shaped projections of the first slider 6 and the grooves of the casing cooperate with each other to guide sliding of the shutter 5 between an open position thereof and a closed position thereof. The second sliders 7 in pair are arranged on the opposite ends of the first slider 6 and the coiled spring 8 is held on the second sliders 7 so as to act an elastic restoring force in a direction of pulling the sliders 7 toward each other.

Now, the manner of forcing the shutter 5 in the direction of closing of the shutter 5 will be described.

For example, when the shutter 5 is opened in a right-hand direction, left-hand one of the second sliders 7 is kept abutted against projected walls provided at left side ends of the head insertion holes 12 and 22 of the casing and right-hand one of the second sliders 7 is moved in a right-hand direction together with the first slider 6. This causes the coiled spring 8 to be expanded, so that the spring 8 may generate an elastic restoring force for biasing the shutter 5 in a direction in which it is closed.

The first and second sliders 6 and 7 are each constructed to have a vertically symmetric structure. The second sliders 7 are arranged so as to elastically interpose the first slider 6 therebetween through the spring 8. The first and second sliders 6 and 7 are incorporated in one of the upper and lower casing members 1 and 2. Then, the upper and lower casing members 1 and 2 are securely joined together, followed by fixing of the slider 5 on the first slider 6. This permits the shutter 5 to be moved together with the first slider 6 while being mounted on the first slider 6. The second sliders 7 are arranged on the opposite ends of the first slider 6 and the elastic force of the spring 8 acts on the sliders 6 and 7 so as to force the first slider 6 in the direction in which the shutter 5 is closed.

The shutter guide mounting sections 13, as shown in Figs. 2A and 2B, are each formed so that a thickness thereof is increased in an amount substantially corresponding to a thickness of the thin-wall distal end of the shutter 5 as compared with the shutter sliding region 14. The shutter guides 3 are each fixed on each of the shutter guide mounting sections 13 by fusion welding. Such fixing by fusion attains both an improvement in workability in manufacturing of the disc cartridge and a reduction in manufacturing cost of the disc cartridge as compared with fixing by means of an adhesive or a both-sided adhesive tape.

In the illustrated embodiment, the shutter guide mounting sections 13, as described above, are each provided at an end thereof away from the shutter 5 with the positioning recesses 15 for positioning the shutter guide 3. Four such positioning recesses 15 are arranged at predetermined intervals in a width direction of the shutter sliding region 14 in which the shutter 5 is moved. The number of positioning recesses 15 to be provided may be suitably selected depending on a range of movement of the shutter 5. The shutter positioning recesses 15 are each formed to have a depth extending to an intermediate position of the thickness of a corresponding one of the upper and lower casing members 1 and 2 of the casing without penetrating the casing member. This effectively prevents dust or the like produced by operation such as fusion or the like from being adhered to the disc-like medium 4 due to vibration or the like in use of the disc cartridge.

In each of the shutter guides 3, as described above with reference to Figs. 3A and 3B, the positioning projections 31 are provided with the gates 32, so that it is merely required that the shutter guide 3 be provided at the portion thereof opposite to the shutter guide mounting section 13 with the ribs 33 for fusion while eliminating arrangement of any needless projection or recess thereon. This permits the shutter guide 3 to be manufactured at a reduced cost while providing the shutter with increased parallelism and dimensional accuracy.

In the embodiment shown in Figs. 4A and 4B, as described above, in view of the fact that formation of each of the distal ends 5₁ of the shutter 5 with a reduced thickness possibly causes the distal end to be inwardly curved or deflected, each of the shutter sliding regions 14 is so formed that the portion thereof corresponding to the distal end 5₁ of the shutter 5 is depressed from the remaining part of the shutter sliding region 14. Such depression may be accomplished by downwardly slanting the portion of the shutter sliding region 14 as indicated by reference numeral 14₁ or forming the portion with a recessed step. This ensures smooth movement or sliding of the shutter 5 while keeping the shutter 5 from being abutted against the casing.

The shutter 5 may be formed of polyacetal resin or the like to have a substantially U-shape in section by injection molding. Such resin permits both cost-saving and weight-saving in manufacturing of the shutter to be attained as compared with metal such as, for example, stainless steel or surface-treated aluminum. Also, it facilitates manufacturing of the shutter irrespective of complication in configuration thereof.

When the shutter 5 is thus made of resin, the connection plate of the shutter 5 is readily provided thereon with the projection 5₂, which may be used as an abutment for a shutter operating member (not shown) of a recording/reproducing equipment. Also, the first slider 6 fitted in the shutter 5 may be provided with a portion abutted against an inner surface of the projection 5₂ of the shutter 5 so as to act as a reinforcement for the shutter. This permits the shutter 5 to be relatively reduced in thickness and improved in appearance and dimensional stability without any defect, such as shrink mark or the like.

In the drawings, reference numeral 19 designates a label area and 20 is an area for receiving the disc-like medium 4 therein.

In the embodiments described above, the disc-like medium 4 is constructed to have a both-sided structure. Alternatively, it may be in the form of a single-sided disc.

As can be seen from the foregoing, the disc cartridge of the present invention is so constructed that the shutter sliding regions are each provided thereon with a shutter guide mounting section for mounting a corresponding one of the shutter guides thereon. The shutter guide mounting section is formed so as to have a surface level defined between a surface of the shutter sliding region and the outer surface of the casing. The shutter guide mounting section is disposed at a position adjacent to a corresponding one of distal ends of the shutter when the shutter is fitted on the casing, and provided with at least one positioning recess. The shutter guides are each provided with at least one positioning projection which is engagedly fitted in the positioning recess of the shutter guide and are fixed to the shutter guide mounting sections by fusion welding, respectively. Such construction of the present invention ensures positive sliding of the shutter on the casing and permits the shutter to have a reduced size while providing the shutter with increased dimensional accuracy. Also, such construction permits the shutter to be made of synthetic resin inherently reduced in cost and enhances operability of the shutter. Further, such construction ensures positive and safe mounting of the shutter on the casing to substantially increase efficiency and workability in assembling of the disc cartridge. In addition, such construction provides the disc cartridge with increased reliability in operation.

While preferred embodiments of the invention have been described with a certain degree of particularity with reference to the drawings, obvious modifications and variations are possible in light of the above teachings. It is therefore to be understood that within the scope of the appended claims, the invention may be practiced otherwise than as specifically described.

## Claims

1. A disc cartridge comprising:
a casing (1, 2);
a disc-like medium (4) rotatably received in said casing (1, 2):
said casing (1, 2) being formed with openings (11, 21; 12, 22) through which at least a part of said disc-like medium (4) extending in a radial direction thereof is outwardly exposed and which permit a recording/reproducing head and a drive shaft to be inserted thereinto;
said casing (1, 2) being formed on an outer surface thereof with shutter sliding regions (14) in a manner to be recessed from said outer surface;
a shutter (5) slidably mounted on said shutter sliding regions (14) of said casing (1, 2) so as to selectively close said openings (11, 21; 12, 22) of said casing (1, 2); and
shutter guides (3) arranged on said outer surface of said casing (1, 2), characterized in that:
said shutter sliding regions (14) are each provided thereon with a shutter guide mounting section (13) for mounting a corresponding one of said shutter guides (3) thereon;
said shutter guide mounting section (13) is formed so as to have a surface level defined between a surface of said shutter sliding region (14) and said outer surface of said casing (1, 2);
said shutter guide mounting section (13) is disposed at a position adjacent to a corresponding one of distal ends (5₁) of said shutter (5) when said shutter (5) is fitted on the casing (1, 2);
said shutter guide mounting section (13) is provided with at least one positioning recess (15);
said shutter guides (3) are each provided with at least one positioning projection (31) which is engagedly fitted in said positioning recess (15) of said shutter guide mounting section (13); and
said shutter guides (3) are fixed to said shutter guide mounting sections (13) by fusion welding, respectively.

2. A disc cartridge as defined in claim 1, characterized in that said shutter (5) is made of synthetic resin and formed so that said distal ends (5₁) thereof arranged inside the respective shutter guides (3) each have a thickness smaller than that of a portion thereof covering said openings (11, 21; 12, 22) of said casing (1, 2).

3. A disc cartridge as defined in claim 1 or 2, characterized in that said shutter sliding regions (14) are each so formed that a portion (14₁) thereof positionally corresponding to a respective one of said distal ends (5₁) of said shutter (5) is depressed from the remaining part of said sliding region (14).

4. A disc cartridge as defined in any one of claims 1 to 3, characterized in that a plurality of said positioning recesses (15) are formed in said shutter guide mounting section (13) in a manner to be spaced from each other in a direction of movement or sliding of said shutter (5); and
said positioning recesses (15) are each formed to have a depth smaller than a thickness of said casing (1, 2) so as not to penetrate said casing (1, 2).

5. A disc cartridge as defined in any one of claims 1 to 4, characterized in that said shutter guides (3) are each made of synthetic resin; and
said positioning projection (31) is formed with a submarine gate (32) for molding of said shutter guide (3).

6. A disc cartridge as defined in any one of claims 1 to 5, characterized in that said shutter guides (3) are each so formed that a portion (23) thereof positionally corresponding to said shutter guide mounting section (13) has a thickness larger than that of a distal end thereof.
